# EUROPÄISCHE PATENTSCHRIFT

(11) **EP 2 864 143 B1**
(45) Veröffentlichungstag und Bekanntmachung des Hinweises auf die Patenterteilung: **25.05.2016**
(21) Anmeldenummer: 13744998.9
(22) Anmeldetag: 22.07.2013
(51) Int. Cl.: B60K 1/04, B66F 9/075, B60S 5/06, H01M 10/42

(54) **VORRICHTUNG ZUM LAGERN EINER BATTERIE**
DEVICE FOR MOUNTING A BATTERY
DISPOSITIF DE STOCKAGE D'UNE BATTERIE

(30) Priorität: 06.08.2012 DE 102012213909
(43) Veröffentlichungstag der Anmeldung: 29.04.2015
(73) Patentinhaber: Siemens Aktiengesellschaft, 80333 München (DE)
(72) Erfinder: BRUCH, Robert, 81243 München (DE); STELZLE, Wilfried, 85253 Kleinberghofen (DE)
(86) Internationale Anmeldenummer: PCT/EP2013/065376
(87) Internationale Veröffentlichungsnummer: WO 2014/023558

(56) Entgegenhaltungen:
- EP-A1- 2 236 368
- EP-A1- 2 277 820
- WO-A1-2009/068304
- WO-A1-2012/114040

## Beschreibung

Die Erfindung betrifft eine Vorrichtung zum Lagern einer Batterie nach dem Oberbegriff des Patentanspruches 1.

Eine solche Vorrichtung ist einem Fachmann im Bereich des Schienenverkehrs aus der Praxis bereits bekannt. Schienenfahrzeuge müssen in bestimmten vorgeschriebenen Abständen gewartet werden, um ihren fehlerfreien Betrieb sicherzustellen. Aus diesem Grund wird eine Batterie in einem Batteriekasten auf einer Auflage gelagert und dort verschraubt. Bei der Wartung oder Prüfung einer solchen Batterie wird zunächst der Gehäusedeckel geöffnet, um Einblick in das Gehäuse zu erhalten. Bleibt die Batterie fest verschraubt, können wenige einfache Prüfungen durchgeführt werden. Für aufwändigere Prüfung muss die Batterie jedoch aus dem Batteriekasten oder Gehäuse herausgezogen werden. Dies erfordert jedoch einen beträchtlichen Demontageaufwand. Nach der Demontage der Batterie kann diese von den Gleitschienen geführt aus dem Gehäuse heraus und beispielsweise auf einen extra bereitgestellten Hubwagen gezogen werden.

Aus der internationalen Veröffentlichung WO 2009/068304 A1 ist ein Elektrofahrzeug, insbesondere Flurförderfahrzeug mit Batteriesicherung bekannt. Die Batteriesicherung umfasst einen Sicherungsbügel für einen im Fahrzeug aufgenommenen Batterieblock. Der Sicherungsbügel umfasst einen in ein erstes Rahmenteil des Fahrzeugs einführbaren Eingriffsabschnitt, ein in ein zweites Rahmenteil einhängbares Befestigungselement und einen sich dazwischen erstreckenden Halteabschnitt. Der Sicherungsbügel liegt in einer im Fahrzeug eingesetzten Sicherungsstellung mit einem Abstützbereich wenigstens teilweise am Batterieblock an. Der Abstützbereich des Sicherungsbügels befindet sich im Bereich des Halteabschnitts oder im Bereich des Übergangs zwischen Halteabschnitt und Eingriffsabschnitt. Der Abstützbereich bildet derart ein Auflager des Sicherungsbügels am Batterieblock, dass bei in das erste Rahmenteil eingeführtem Eingriffsabschnitt das Befestigungselement unter elastischer Verformung des Halteabschnitts im zweiten Rahmenteil einhängbar ist.

Aufgabe der Erfindung ist es, eine Vorrichtung der eingangs genannten Art bereitzustellen, mit der die Wartung der Batterie vereinfacht wird.

Die Erfindung löst diese Aufgabe durch eine gattungsgemäße Vorrichtung mit den im kennzeichnenden Teil des Patentanspruches 1 angegebenen Merkmalen.

Gehäuse und Gehäusedeckel der Batterie dienen nicht nur als Schutz gegenüber Verunreinigungen. Erfindungsgemäß ist der Gehäusedeckel vielmehr Teil eines Bewegmechanismus, der ein einfaches und demontagefreies Herausbewegen eines Troges aus dem Gehäuse ermöglicht. Hierzu ist der Gehäusedeckel an dem Gehäuse angelenkt, so dass durch einfaches Aufklappen des Gehäusedeckels die Batterie auf den Gehäusedeckel gezogen werden kann. Dies gilt selbstverständlich auch für den umgekehrten Fall, bei dem die Batterie von dem Gehäusedeckel aus in das Gehäuse hineinbewegt wird. Um ein Herausziehen der Batterie aus dem Gehäuse auf den Gehäusedeckel von Hand zu ermöglichen, ist ein Bewegmechanismus vorgesehen, der beispielsweise Gleit- oder Rollmittel aufweist, die von Hand von einer Betriebsstellung, in der die Gleit- und/oder Rollmittel wirkungslos sind, in eine Bewegstellung überführbar sind, in der die Gleit- und/oder Rollmittel ihre Wirkung entfalten und eine Bewegung des Trogs mit der Batterie von Hand ermöglichen. In der normalen Betriebsstellung ist hingegen ein sicherer Stand des Troges beziehungsweise der Batterie in dem Gehäuse gewährleistet.

Erfindungsgemäß umfasst der Bewegmechanismus an der Innenseite des Gehäusedeckels angeordnete Deckelführungsschienen, die in einer ausgeklappten Stellung zu im Inneren des Gehäuses angeordneten Gehäuseführungsschienen fluchtend angeordnet sind. Aufgrund dieser fluchtenden Anordnung der Deckelführungsschienen zu den Gehäuseführungsschienen können diese als Führungsmittel für einen Gleit- oder Rollmechanismus des Bewegmechanismus dienen. Hierzu ist beispielsweise zweckmäßig, die Gehäuseführungsschienen beispielsweise durch an diesen angelenkte Brückenschienen oder ausziehbare Brückenschienen zu den Deckelführungsschienen hin zu verlängern, so dass eine durchgängige Führung zwischen Gehäuse und Gehäusedeckel bereitgestellt ist.

Gemäß einer bevorzugten Ausgestaltung der Erfindung ist der Gehäusedeckel an seiner Innenseite mit einem Innendeckel ausgerüstet, der Innendeckelführungsschienen aufweist, die in einer ausgeklappten Stellung des Innendeckels die Gehäuseführungsschienen zu einer vom Gehäuse abgewandten Seite hin verlängern. Gemäß dieser vorteilhaften Weiterentwicklung der Erfindung kann der Gehäusedeckel in seiner ausgeklappten Stellung zu der Seite hin verlängert werden, die von dem Gehäuse abgewandt ist. Im ausgeklappten Zustand sowohl des Gehäusedeckels als auch des Innendeckels ist die Gesamtlänge der Führungsschienen, die sich aus der Summe der Länge der Deckelführungsschienen und der Länge der Innendeckelführungsschienen ergibt, an die Länge des Troges in einer Weise angepasst, dass der Trog vollständig aus dem Gehäuse herausgezogen werden kann und auf dem Gehäusedeckel sicher abgestellt ist. Um das Gewicht des Troges einschließlich der auf ihn abgestellten Batterie sicher halten zu können, ist der Gehäusedeckel auch an seiner vom Gehäuse abgewandten Seite über eine Schwenkhebelanordnung mit dem Gehäuse verbunden. Die Schwenkhebelanordnung ist in der Betriebsstellung des Gehäusedeckels in dem von dem Gehäusedeckel verschlossenen Gehäuse angeordnet. Wird der Gehäusedeckel in seine Bewegstellung überführt, wird auch die Schwenkhebelanordnung ausgeklappt und beim Herausziehen des Troges mit der Batterie auf Zug beansprucht, so dass für den Gehäusedeckel ein zusätzlicher Halt bereitgestellt ist.

Gemäß einer bevorzugten Ausgestaltung der Erfindung umfasst der Bewegmechanismus Rollen. Die Rollen sind vorteilhafterweise direkt oder indirekt, beispielsweise einen Hebel, an dem Trog befestigt. Die Rollen sind beispielsweise mit Arretierungsmitteln ausgerüstet, die beim Normalbetrieb ein Hin- und Herrollen des Troges in dem Gehäuse verhindern. Die Arretierungsmittel weisen beispielsweise einen Klapp- oder Schwenkmechanismen auf. Dieser Schwenkmechanismus ermöglicht ein Verschwenken der Rollen, wodurch der Trog an einer Seite angehoben wird, wodurch die Rollen mit der Innenseite des Gehäuses oder mit dort vorgesehenen Führungsschienen in Kontakt geraten. Mit anderen Worten ist der Trog über die an ihn befestigten Rollen im Gehäuse abgestützt. In dieser Stellung kann der Trog dann einfach aus dem Gehäuse herausgerollt werden.

Gemäß einer bevorzugten Ausgestaltung der Erfindung ist der Trog in einer Bewegstellung ausschließlich über die Rollen in dem Gehäuse abgestützt.

Gemäß einer bevorzugten Ausgestaltung der Erfindung sind die Rollen zumindest teilweise an einem Schwenkarm befestigt, der an dem Trog angelenkt ist. Der Schwenkarm verfügt beispielsweise über einen Griffabschnitt mit einer Länge, die eine ausreichend große Hebelkraft bereitstellt, so dass der Schwenkarm von Hand von der Betriebsstellung in seine Bewegstellung überführt werden kann. In der Bewegstellung sind die an dem Schwenkarm befestigen Rollen in Kontakt mit dem Gehäuse oder den in diesem angeordneten Führungsschienen, so dass der Trog allein über die besagten Rollen in dem Gehäuse abgestützt ist.

Zweckmäßigerweise ist der Schwenkarm in seiner Betriebsstellung vollständig in dem Gehäuse angeordnet und so an dem Trog befestigt, dass die an ihm befestigten Rollen mit Abstand zum Gehäuse oder mit Abstand zu in dem Gehäuse angeordneten Führungsschienen angeordnet ist.

Gemäß einer diesbezüglichen zweckmäßigen Weiterentwicklung ist der Trog in der Bewegstellung des Schwenkarms auch durch an der vom Schwenkarm abgewandten Seite des Troges angeordneten Rollen an den Führungsschienen abgestützt. Auf diese Art und Weise liegt der Trog nicht mehr träge auf den Führungsschienen oder dem Gehäuseboden auf und kann einfach aus dem Gehäuse herausgezogen werden.

Um ein ungewolltes Verschwenken des Schwenkarms zu vermeiden, ist der Schwenkarm mit Arretierungsmitteln ausgerüstet. Die Arretierungsmittel umfassen beispielsweise ein Arretierungsgestänge, das beispielsweise in einen bügelförmigen oder U-förmigen Griff eingearbeitet ist. Beim Verschwenken kann das Entriegelungsgestänge daher von Hand entriegelt werden. Lässt der Benutzer den Schwenkarm jedoch los, greifen die Arretierungsmittel wieder ein und verhindern, dass das Gewicht der Batterie den Schwenkarm heftig in dessen Betriebsstellung verschwenkt. Eine Verletzung von Benutzern ist auf diese Art und Weise vermieden.

Zweckmäßigerweise sind Haltemittel zum Halten des Troges in dem Gehäuse vorgesehen.

Gemäß einer weiteren bevorzugten Ausgestaltung der Erfindung sind Verbindungskabel vorgesehen, mit denen eine Batterie mit den jeweils vorgesehenen Komponenten des Schienenfahrzeugs verbunden werden kann. Die Verbindungskabel weisen eine solche Länge auf, dass der Trog ohne Demontage deren mit der Batterie aus dem Gehäuse herausgezogen werden kann. Auf diese Art und Weise ist eine Prüfung der Batterie auf dem Gehäusedeckel ermöglicht, wenn diese auf dem Gehäusedeckel steht.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen und wobei
- Figur 1: eine perspektivische Darstellung eines Ausführungsbeispiels der erfindungsgemäßen Vorrichtung, die sich in ihrer Betriebsstellung befindet,
- Figur 2: die Vorrichtung gemäß Figur 1 mit ausgeklapptem Gehäusedeckel,
- Figur 3: die Vorrichtung gemäß Figur 2 mit ausgeklapptem Innendeckel,
- Figur 4: die Vorrichtung gemäß Figur 3 mit durchgängig verlängerten Führungsschienen,
- Figur 5: eine Seitenansicht eines Troges in der Betriebsstellung,
- Figuren 6 und 7: eine vergrößerte Darstellung der direkt und indirekt an dem Trog befestigten Rollen in der Betriebsstellung,
- Figur 8: den Trog gemäß Figur 5 in einer teilweise perspektivischen Ansicht,
- Figur 9: eine dem Gehäusedeckel zugewandte und an dem Schwenkarm befestigte Rolle mit Arretierungsmechanismus,
- Figur 10: den Trog gemäß Figur 5 in einer Bewegstellung,
- Figuren 11, 12 und 13: vergrößerte Darstellungen, insbesondere der Rollen, des Troges gemäß Figur 10,
- Figur 14: die Vorrichtung gemäß Figur 4 in ihrer Bewegstellung und
- Figur 15: die Vorrichtung gemäß Figur 14 mit herausgezogenem Trog zeigen.

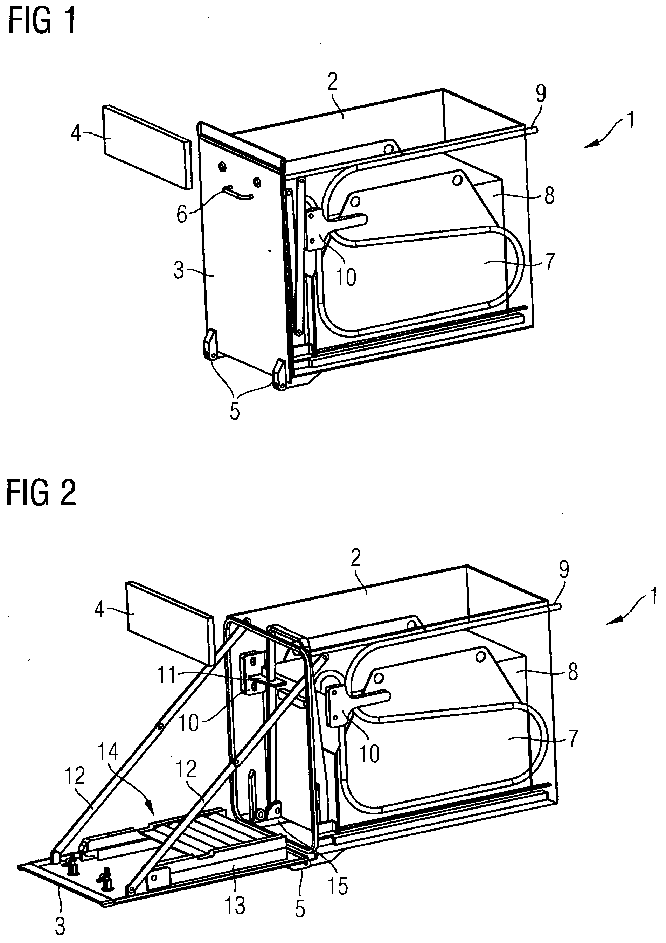

Figur 1 zeigt ein Ausführungsbeispiel der erfindungsgemäßen Vorrichtung 1, die ein Gehäuse 2 mit einem Gehäusedeckel 3 aufweist. Die Vorrichtung 1 ist auf figürlich nicht näher dargestellte Weise in einem Schienenfahrzeug angeordnet, von dem in Figur 1 lediglich ein Längsträger 4 angedeutet ist. Dabei ist das Gehäuse 2 vom Gehäusedeckel 3 her zugänglich. Der Gehäusedeckel 3 ist an den Anlenkstellen 5 an dem Gehäuse 2, das auch als Batteriekasten bezeichnet werden kann, angelenkt und kann somit verschwenkt werden. Zum Erleichtern dieses Verschwenkens ist der Gehäusedeckel 3 mit einem Griff 6 ausgerüstet. Das Gehäuse 2 ist in Figur 1 transparent gezeichnet, so dass ein in dem Gehäuse 2 angeordneter Trog 7 erkennbar ist. Auf dem Trog 7 ist eine Batterie 8 abgestellt. In Figur 1 ist die Vorrichtung 1 in ihrer Betriebsstellung gezeigt, in der die Batterie 8 bewegungslos in dem Gehäuse 2 angeordnet ist. Um den Trog 7 fest im Gehäuse 2 zu halten, sind Befestigungspunkte 10 vorgesehen, von denen in Figur 1 lediglich einer erkennbar ist.

Figur 2 zeigt die Vorrichtung 1 gemäß Figur 1 mit aufgeklapptem Gehäusedeckel 3. In dieser Ansicht ist auch der hintere Befestigungspunkt 10 verdeutlicht. Ferner ist erkennbar, dass die Befestigungspunkte 10 an ihrer von der Innenseite des Gehäuses 2 abgewandten Seite einen verschwenkbaren Haltebügel 11 aufweisen, der ein Herausrutschen des Troges 7 sowie der Batterie 8 aus dem Gehäuse 2 verhindert. Der Haltebügel 11 kann von Hand entriegelt und anschließend verschwenkt werden, so dass ein Herausziehen des Trogs 7 ermöglicht ist.

In Figur 2 ist ferner erkennbar, dass der Gehäusedeckel 3 nicht nur an den Anlenkstellen 5 mit dem Gehäuse 2 schwenkbar verbunden ist. Vielmehr sind zusätzliche Gelenkarme 12 vorhanden, die in Querrichtung gesehen beidseitig des Gehäusedeckels 3 angeordnet sind. Dabei verbinden sie eine von den Anlenkstellen 5 abgewandte Seite des Gehäusedeckels 3 mit dem Gehäuse 2. Hierzu sind sie jeweils einerseits im oberen Bereich an einer Seitenwand des Gehäuses 2 und andererseits am Gehäusedeckel 3 angelenkt. In der aufgeklappten Stellung des Gehäusedeckels 3 werden die Gelenkarme 12 daher auf Zug beansprucht und sorgen auf diese Weise für eine stabile Halterung des Gehäusedeckels 3 an dem Gehäuse 2. Der Gehäusedeckel 3 ist mit Deckelführungsschienen 13 ausgerüstet. Auch ist ein Innendeckel 14 vorgesehen, der schwenkbar an den Deckelführungsschienen 13 und somit an dem Gehäusedeckel 3 befestigt ist. Das Gehäuse 2 verfügt über Gehäuseführungsschienen 15, die jedoch in Figur 2 nur teilweise erkennbar sind. Die Deckelführungsschienen 13 sind fluchtend zu den Gehäuseführungsschienen 15 angeordnet.

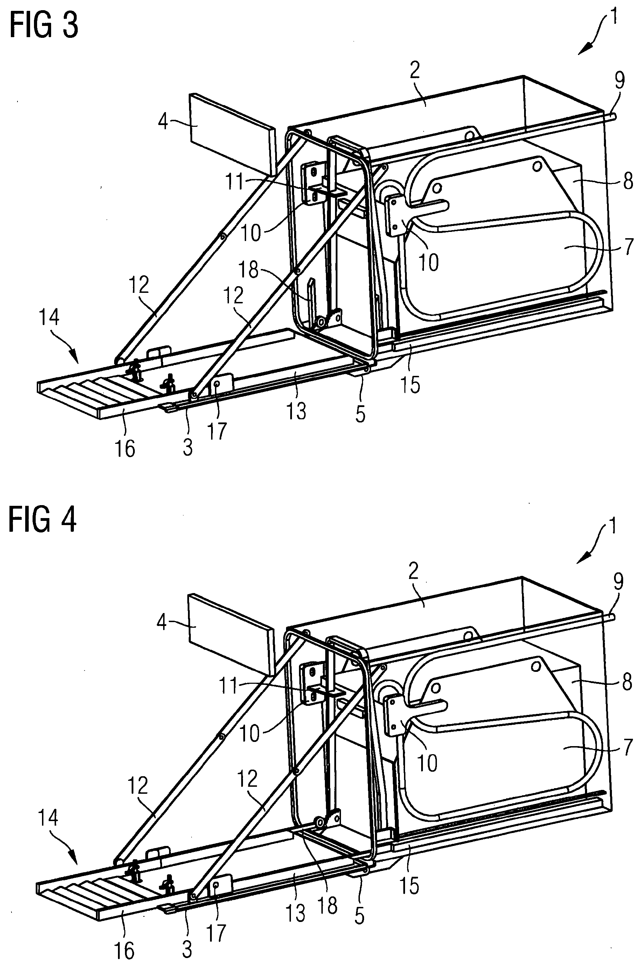

Figur 3 zeigt die Vorrichtung 1 gemäß Figur 2 mit ausgeklapptem Innendeckel 14. Es ist erkennbar, dass die Innendeckelführungsschienen 16 die Deckelführungsschienen 13 zu der in der ausgeklappten Stellung von dem Gehäuse 2 abgewandten Seite des Gehäusedeckels 3 hin verlängern. Die Anlenkstelle 17 des Innendeckels 14 weist zum freien Ende des Gehäusedeckels 3 einen gewissen Abstand auf, so dass die Innendeckelführungsschienen 16 abschnittsweise auf der Innenseite des Gehäusedeckels 3 aufliegen. Dies erhöht die Stabilität der gesamten Führungsschienenanordnung. In Figur 3 ist erkennbar, dass die Gehäuseführungsschienen 15 an ihrer dem Gehäusedeckel 3 in der aufgeklappten Stellung zugewandten Seite verschwenkbare Brückenschienen 18 aufweisen.

Figur 4 zeigt die Vorrichtung 1 gemäß Figur 1, wobei die Brückenschienen 18 in eine Stellung verschwenkt sind, in der sie die Gehäuseführungsschienen 15 zu den Deckelführungsschienen 13 hin verlängern, so dass durch die Gehäuseführungsschienen 15, die Brückenschienen 18, die Deckelführungsschienen 13 und die Innendeckelführungsschienen 16 eine durchgängige Führungsschienenanordnung für den Trog 7 ausgebildet ist. In Figur 4 ist der Trog 7 jedoch in einer Stellung gezeigt, in der dieser von den Befestigungspunkten 10 und weiteren Komponenten des Bewegmechanismus, auf die später noch genauer eingegangen wird, fest in dem Gehäuse 2 gehalten ist. Alle aufgezählten Schienen umfassen jeweils ein Schienenpaar, also jeweils zwei parallel zueinander verlaufende Schienen.

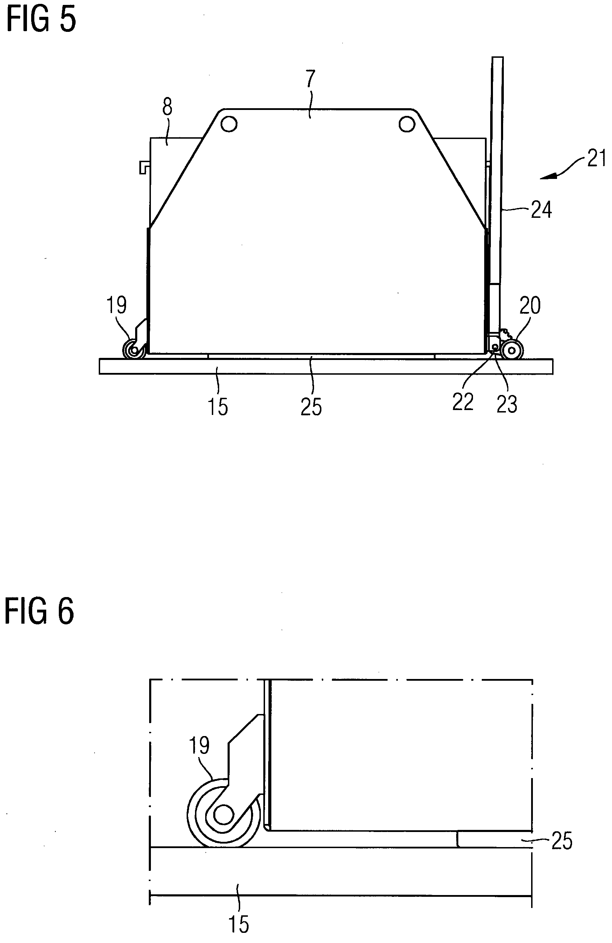

Figur 5 zeigt den Trog 7 mit der Batterie 8 in einer Seitenansicht, wobei von dem Gehäuse 2 lediglich die Gehäuseführungsschienen 15 erkennbar sind. Der Trog 7 ist mit direkt an ihn befestigten Rollen 19 ausgerüstet. Ferner sind Schwenkrollen 20 vorgesehen, die an einem Schwenkarm 21 befestigt sind. Der Schwenkarm 21 ist an einer Schwenkstelle 22 an dem Trog 7 angelenkt und L-förmig ausgebildet. Dabei weist der Schwenkarm 21 einen Rollenabschnitt 23 sowie einen vergleichsweise längeren Armabschnitt 24 auf. Die hinteren Rollen 19 sowie die am Schwenkarm 21 befestigten Schwenkrollen 20 sind in der gezeigten Betriebsstellung mit leichtem Abstand zu den Gehäuseführungsschienen 15 gehalten. Alternativ liegen diese nur locker auf den Gehäuseführungsschienen 15 auf. Das Gewicht der Batterie 8 wird über den Trog 7 und eine unter dem Trog 7 angeordnete und mit diesem verbundene Auflage 25 flächig in eine Bodenwandung des Gehäuses 2 eingeleitet. Aufgrund der Auflage 25 ist der Trog 7 in der in Figur 5 gezeigten Betriebsstellung flächig in dem Gehäuse 2 abgestellt, so dass ein sicherer Stand gewährleistet ist.

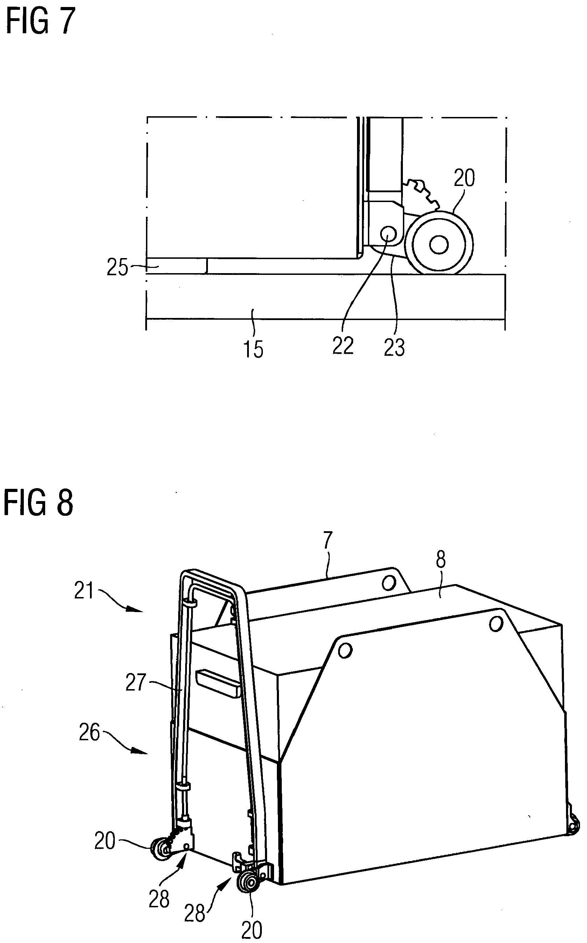

Figur 6 zeigt die hinteren Rollen 19 genauer. Insbesondere hier wird erkennbar, dass die Rollen 19 mit Abstand zu den Gehäuseführungsschienen 15 gehalten sind. Dies gilt entsprechend auch für die Schwenkrollen 20, wie in Figur 7 dargestellt ist.

Figur 8 zeigt den Trog 7 gemäß Figur 5 in einer perspektivischen Darstellung. Insbesondere hieraus wird erkennbar, dass der Schwenkarm 21 bügel- oder mit anderen Worten U-förmig ausgestaltet ist. Darüber hinaus ist der Schwenkarm 21 mit einem Arretierungsmechanismus 26 ausgerüstet. Der Arretierungsmechanismus 26 weist an der Innenseite des bügelförmigen Armabschnitts 24 des Schwenkarms 21 angeordnete Arretierungsstangen 27 auf, die mit einem an der Schwenkstelle 22 zwischen Schwenkarm 21 und Trog 7 angeordneten Zahnkranzabschnitt 28 zusammenwirken.

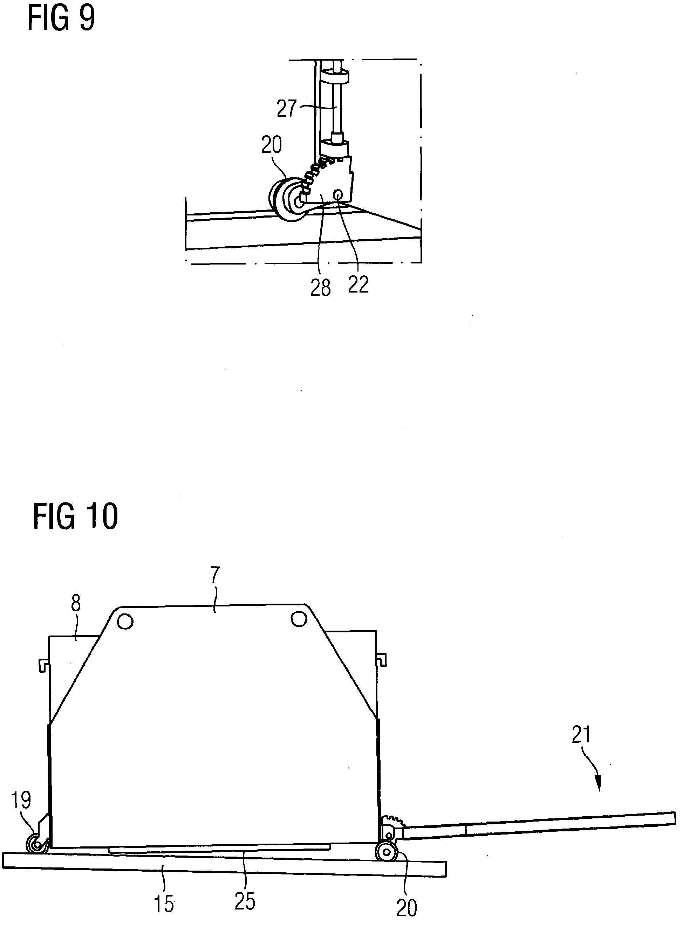

Der Zahnkranzabschnitt 28 sowie die Arretierungsstangen 27 sind in Figur 9 genauer dargestellt. In der dort dargestellten Stellung ist ein Verschwenken des Schwenkarms 21 nicht möglich, da die Arretierungsstangen 27, die mit Federmitteln ausgerüstet sind, sich in Folge der auf sie einwirkenden Federkraft im Eingriff mit Zahnkranz des Zahnkranzabschnitts 28 befinden. Werden die Arretierungsstangen 27 entgegen der besagten Federkraft von Hand aus dem besagten Zahnkranz 28 herausgezogen, so ist ein Verschwenken des Schwenkarms 21 an dem Trog 7 ermöglicht. Gibt der Nutzer die an der Innenseite des Schwenkarms 21 geführten Arretierungsstangen 27 jedoch frei, werden diese durch die nicht gezeigten Federmittel wieder in Eingriff mit dem Zahnkranzabschnitt 28 gebracht, so dass ein weiteres Verschwenken des Schwenkarms 21 blockiert ist. Diese Arretierungsmittel 26 verhindern daher ein ungewolltes Verschwenken des Schwenkarms 21, das ansonsten zu Verletzungen führen könnte.

Figur 10 zeigt wie Figur 5 in einer Seitenansicht, wobei sich der Trog 7 jedoch jetzt in seiner Bewegstellung befindet, in welcher der Schwenkarm 21 verschwenkt ist. Es ist erkennbar, dass in der Bewegstellung die an dem Schwenkarm 21 befestigten Schwenkrollen 20 in Kontakt mit den Gehäuseführungsschienen 15 sind. Dabei wird der Trog 7 an einer Seite angehoben, an welcher der Schwenkarm 21 angelenkt ist. Durch dieses Anheben geraten auch die hinteren Rollen 19 in Kontakt mit den Gehäuseführungsschienen 15, so dass der Trog 7 allein über die Rollen 19 und 20 auf den Gehäuseführungsschienen 15 abgestützt ist. Die Auflage 25 ist hingegen mit Abstand zum Gehäuse 2 und den Gehäuseführungsschienen 15 gehalten.

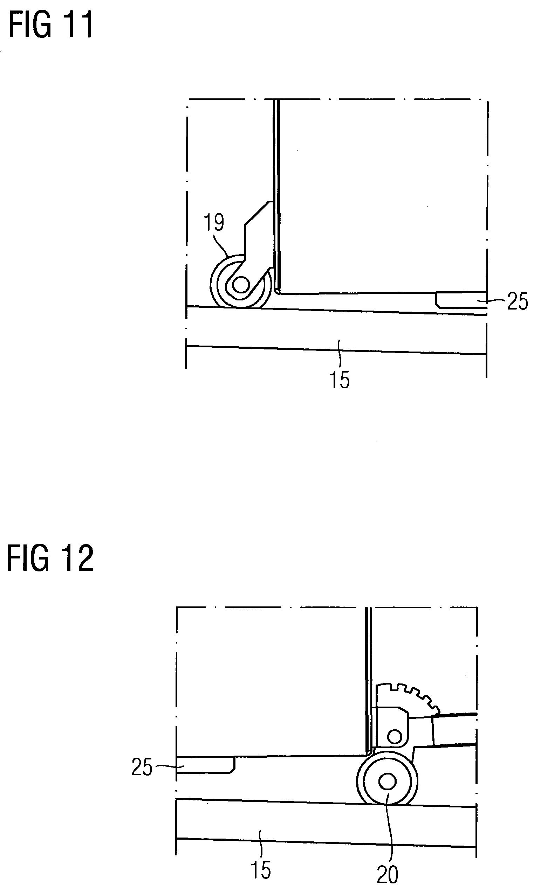

Die Figuren 11 und 12 verdeutlichen nur noch einmal genauer, dass der Trog 7 allein durch die hinteren Rollen 13 sowie die vorderen Schwenkrollen 20 an den Gehäuseführungsschienen 15 abgestützt ist.

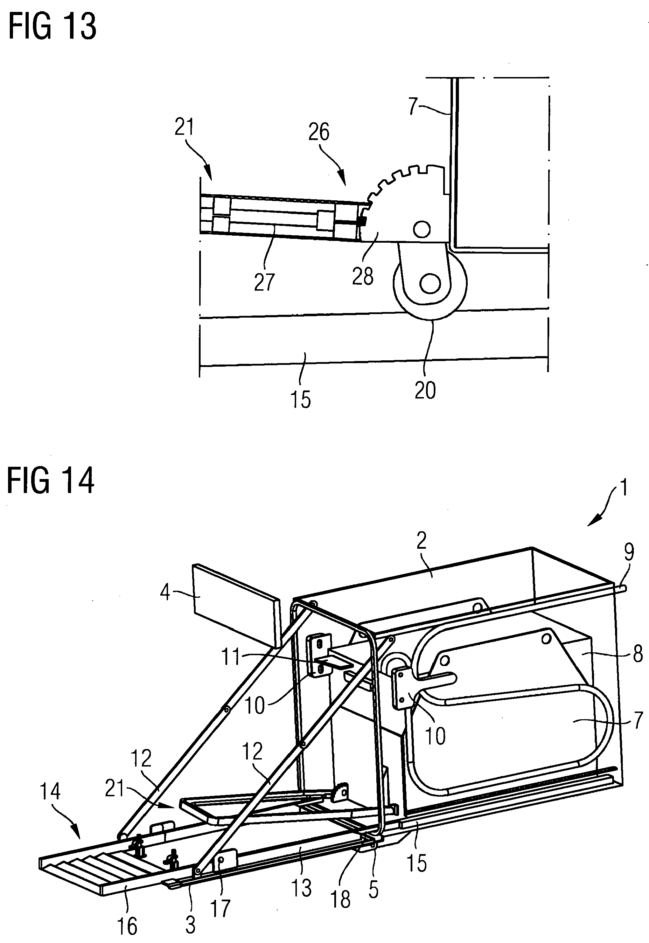

In Figur 13 ist der Arretierungsmechanismus 26 genauer gezeigt. In der in Figur 13 gezeigten Stellung hat ein Nutzer nach dem Verschwenken des Schwenkarms 21 die Arretierungsstangen 27 losgelassen, so dass diese sich wieder im Eingriff mit dem Zahnkranzabschnitt 28 befinden. Ein Verschwenken des Schwenkarms 21 ist in der Bewegstellung somit ebenfalls verhindert.

Figur 14 zeigt den Trog 7 und den Schwenkarm 21, die sich jeweils in ihrer Bewegstellung befinden, wobei der Trog 7 und der Schwenkarm 21 jedoch noch in dem Gehäuse 2 angeordnet sind. Da der Trog 7 lediglich über Rollen 19, 20 an den Gehäuseführungsschienen 15 abgestützt ist, kann dieser auf einfache Weise von Hand auf den durch den Innendeckel 14 verlängerten Gehäusedeckel 3 herausgezogen werden.

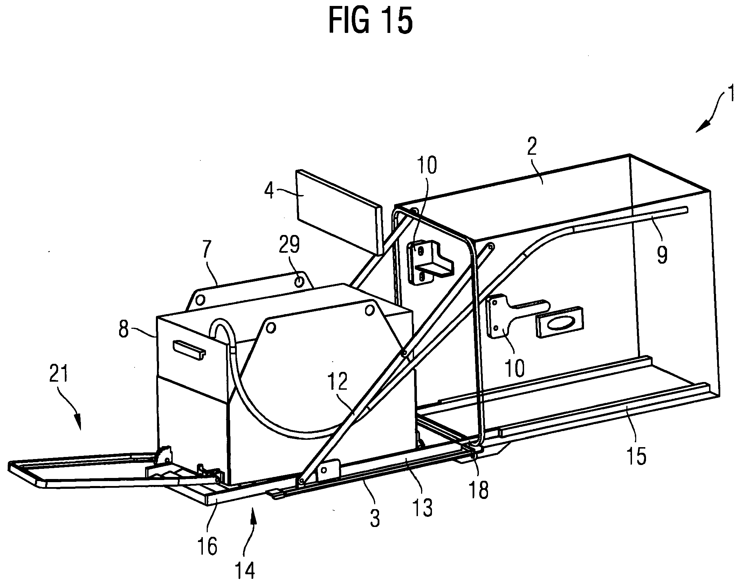

In dieser Stellung ist die Vorrichtung 1 in Figur 15 gezeigt. Es ist erkennbar, dass die Kabel 9 eine ausreichende Länge aufweisen, so dass die Batterie 8 angeschlossen bleiben kann, wenn der Trog 7 von Hand auf den Gehäusedeckel 3 gezogen wird. Sie kann in dieser Stellung, Fig. 15, bequem auf ihre Funktionsfähigkeit überprüft werden.

In Figur 15 ist ferner erkennbar, dass der Trog 7 mit oberen Bohrungen 29 ausgerüstet ist, die ein Herausheben des Troges 7 einschließlich Batterie 8, beispielsweise mittels eines Hebekrans, ermöglichen.

## Patentansprüche

1. Vorrichtung (1) zur Lagerung einer Batterie (8), mit einem Gehäuse (2), einem an dem Gehäuse (2) angelegten Gehäusedeckel (3), einem in dem Gehäuse (2) angeordneten Trog (7), auf dem die Batterie (8) abstellbar ist, und einem Bewegmechanismus (3,13,14,15,16,18,19,20,21) zum Herausbewegen des Trogs (7) aus dem Gehäuse (2), wobei der Gehäusedeckel (3) Teil des Bewegmechanismus (3,13,14,15,16,18,19,20,21) ist
**dadurch gekennzeichnet, dass**
der Bewegmechanismus (3,13,14,15,16,18,19,20,21) an der Innenseite des Gehäusedeckels (3) angeordnete Deckelführungsschienen (13) umfasst, die in einer ausgeklappten Stellung zu im Inneren des Gehäuses (2) angeordneten Gehäuseführungsschienen (15) fluchtend angeordnet sind.

2. Vorrichtung (1) nach Anspruch 1,
**dadurch gekennzeichnet, dass**
der Gehäusedeckel (3) mit einem an seiner Innenseite angeordneten Innendeckel (4) ausgerüstet ist, der Innendeckelführungsschienen (16) aufweist, die in einer ausgeklappten Stellung des Innendeckels (14) die Deckelführungsschienen (13) zu einer von dem Gehäuse (2) abgewandten Seite hin verlängern.

3. Vorrichtung (1) nach einem der vorhergehenden Ansprüche, **dadurch gekennzeichnet, dass**
der Bewegmechanismus (3,13,14,15,16,18,19,20,21) Rollen (19,20) aufweist.

4. Vorrichtung (1) nach Anspruch 3,
**dadurch gekennzeichnet , dass**
die Rollen (19,20) direkt oder indirekt an dem Trog (7) befestigt sind.

5. Vorrichtung (1) nach Anspruch 3,
**dadurch gekennzeichnet, dass**
der Trog (7) in einer Bewegstellung ausschließlich über die Rollen (19,20) in dem Gehäuse (2) abstützt ist.

6. Vorrichtung (1) nach Anspruch 3,
**dadurch gekennzeichnet, dass**
die Rollen (19,20) zumindest teilweise an einem Schwenkarm (21) befestigt sind, der an dem Trog (7) angelenkt ist.

7. Vorrichtung (1) nach Anspruch 6,
**dadurch gekennzeichnet, dass**
der Schwenkarm (21) in einer Betriebsstellung vollständig in dem Gehäuse (2) angeordnet ist und so an dem Trog (7) befestigt ist, dass die an ihm befestigte Schwenkarmrollen (20) mit Abstand zu in dem Gehäuse (2) angeordneten Gehäuseführungsschienen (15) angeordnet sind oder kraftlos auf den Gehäuseführungsschienen (15) aufliegen, wobei in einer Bewegstellung des Schwenkarms (21) der Trog (7) über die Schwenkarmrollen (20) an den Gehäuseführungsschienen (15) abgestützt ist.

8. Vorrichtung (1) nach Anspruch 7,
**dadurch gekennzeichnet, dass**
in der Bewegstellung des Schwenkarms (21) auch durch die an der von dem Schwenkarm (21) abgewandten Seite des Troges (7) angeordneten Rollen (19) an den Gehäuseführungsschienen (15) abgestützt ist.

9. Vorrichtung (1) nach einem der Ansprüche 6 bis 8,
**dadurch gekennzeichnet, dass**
der Schwenkarm (21) mit Arretierungsmitteln (26) ausgerüstet ist, die ein ungewolltes Verschwenken des Schwenkarms (21) verhindern.

10. Vorrichtung (1) nach einem der vorhergehenden Ansprüche, **dadurch gekennzeichnet, dass** Haltemittel (10) zum Halten des Troges (7) in dem Gehäuse (2) vorgesehen sind.

## Claims

1. Device (1) for mounting a battery (8), having a housing (2), a housing cover (3) attached to the housing (2), a trough (7) arranged in the housing (2), in which the battery (8) can be stored, and a movement mechanism (3, 13, 14, 15, 16, 18, 19, 20, 21) for moving the trough (7) out of the housing (2), wherein the housing cover (3) is part of the movement mechanism (3, 13, 14, 15, 16, 18, 19, 20, 21),
**characterised in that**
the movement mechanism (3, 13, 14, 15, 16, 18, 19, 20, 21) comprises cover guide rails (13) arranged on the inside of the housing cover (3), which, in a folded-out position, are arranged flush with housing guide rails (15) arranged in the interior of the housing (2).

2. Device (1) according to claim 1,
**characterised in that**
the housing cover (3) is equipped with an internal cover (4) arranged on its inside, which has internal cover guide rails (16), which, in a folded-out position of the internal cover (14), extend the cover guide rails (13) toward a side facing away from the housing (2).

3. Device (1) according to one of the preceding claims, **characterised in that**
the movement mechanism (3, 13, 14, 15, 16, 18, 19, 20, 21) has rollers (19, 20).

4. Device (1) according to claim 3,
**characterised in that**
the rollers (19, 20) are fastened directly or indirectly to the trough (7).

5. Device (1) according to claim 3,
**characterised in that**
in a movement position, the trough (7) is supported in the housing (2) exclusively by way of the rollers (19, 20).

6. Device (1) according to claim 3,
**characterised in that**
the rollers (19, 20) are fastened at least partly to a pivot arm (21), which is hinged to the trough (7).

7. Device (1) according to claim 6,
**characterised in that**
in an operating position, the pivot arm (21) is arranged completely in the housing (2) and fastened to the trough (7) such that the pivot arm rollers (20) fastened thereto are arranged at a distance from housing guide rails (15) arranged in the housing (2) or loosely rest on the housing guide rails (15), wherein, in a movement position of the pivot arm (21), the trough (7) is supported on the housing guide rails (15) by way of the pivot arm rollers (20).

8. Device (1) according to claim 7,
**characterised in that**
in the movement position of the pivot arm (21), support is also provided on the housing guide rails (15) by the rollers (19) arranged on the side of the trough (7) facing away from the pivot arm (21).

9. Device (1) according to one of claims 6 to 8,
**characterised in that**
the pivot arm (21) is equipped with locking means (26) which prevent an unwanted pivoting of the pivot arm (21).

10. Device (1) according to one of the preceding claims,
**characterised in that**
holding means (10) are provided to hold the trough (7) in the housing (2).

## Revendications

1. Dispositif (1) de stockage d'une batterie (8), comprenant un caisson (2), un couvercle (3) mis sur le caisson ( 2 ), une auge ( 7 ), qui est mise dans le caisson ( 2 ) et sur laquelle la batterie ( 8 ) peut être déposée, et un mécanisme ( 3, 13, 14, 15, 16, 18, 19, 20, 21 ) de déplacement pour sortir l'auge ( 7 ) du caisson ( 2 ), le couvercle ( 3 ) faisant partie du mécanisme ( 3, 13, 14, 15, 16, 18, 19, 20, 21 ) de déplacement,
**caractérisé en ce que** le mécanisme ( 3, 13, 14, 15, 16, 18, 19, 20, 21 ) de déplacement comprend des rails ( 13 ) de guidage de couvercle disposés sur la face intérieure du couvercle ( 3 ) et alignés dans une position déployée avec des rails ( 15 ) de guidage de caisson disposés à l'intérieur du caisson ( 2 ).

2. Dispositif ( 1 ) suivant la revendication 1,
**caractérisé en ce que**
le couvercle ( 3 ) est équipé d'un couvercle ( 4 ) intérieur, qui est disposé sur sa face intérieure et qui a des rails ( 6 ) de guidage de couvercle intérieur, lesquels, en une position déployée du couvercle ( 14 ) intérieur, prolonge les rails ( 13 ) de guidage de couvercle vers un côté éloigné du caisson ( 2 ) .

3. Dispositif ( 1 ) suivant l'une des revendications précédentes
**caractérisé en ce que** le mécanisme ( 3, 13, 14, 15, 16, 18, 19, 20, 21 ) de déplacement a des roulettes ( 19, 20 ).

4. Dispositif ( 1 ) suivant la revendication 3,
**caractérisé en ce que** des roulettes ( 19, 20 ) sont fixées directement ou indirectement à l'auge ( 7 ).

5. Dispositif ( 1 ) suivant la revendication 3,
**caractérisé en ce que** l'auge ( 7 ) est, dans une position de déplacement, soutenue dans le caisson ( 2 ) exclusivement par les roulettes ( 19, 20 ).

6. Dispositif ( 1 ) suivant la revendication 3,
**caractérisé en ce que** les roulettes ( 19, 20 ) sont fixées au moins en partie à un bras ( 21 ) pivotant articulé à l'auge ( 7 ).

7. Dispositif ( 1 ) suivant la revendication 6,
**caractérisé en ce que** le bras ( 21 ) pivotant est, dans une position de fonctionnement, disposé entièrement dans le caisson ( 2 ) et ainsi fixé à l'auge ( 7 ) de manière à ce que les roulettes ( 20 ) du bras de pivotement, qui y sont fixées soient disposées à distance des rails ( 15 ) de guidage de caisson disposés dans le caisson ( 2 ) ou s'appliquent sans force sur les rails ( 15 ) de guidage de caisson, l'auge ( 7 ) étant, en position de déplacement du bras ( 21 ) pivotant, supportée sur les rails ( 15 ) de guidage de caisson par les roulettes ( 20 ) du bras pivotant.

8. Dispositif ( 1 ) suivant la revendication 7,
**caractérisé en ce que**, en la position de déplacement du bras ( 21 ) pivotant, l'auge s'appuie aussi sur les rails ( 15 ) de guidage de caisson par les roulettes ( 19 ) disposées du côté de l'auge ( 7 ) éloigné du bras ( 21 ) pivotant.

9. Dispositif ( 1 ) suivant l'une des revendications 6 à 8,
**caractérisé en ce que** le bras ( 21 ) pivotant est équipé de moyens ( 26 ) d'arrêt, qui empêchent un pivotement non délibéré du bras ( 21 ) pivotant.

10. Dispositif ( 1 ) suivant l'une des revendications précédentes,
**caractérisé en ce qu'**il est prévu des moyens ( 10 ) de maintien de l'auge ( 7 ) dans le caisson ( 2 ).
